# EUROPEAN PATENT APPLICATION

(11) **EP 3 550 405 A1**
(43) Date of publication of application: **09.10.2019**
(21) Application number: 19160656.5
(22) Date of filing: 04.03.2019
(51) Int. Cl.: G06F 3/01, G06K 9/00

(54) **CABLE DETECTION FOR AR/VR COMPUTING METHOD AND APPARATUS**

(30) Priority: 05.04.2018 US 201815946699
(71) Applicant: INTEL Corporation, Santa Clara, CA 95054 (US)
(72) Inventor: LAWRENCE, Sean J., 560066 Bangalore (IN); AGHARA, Sanjay R., 560103 Bangalore (IN); ANGADIMANI, Raghavendra, 560016 Bangalore (IN)
(74) Representative: Rummler, Felix

(57) **Abstract**

An apparatus for augmented reality (AR) or virtual reality (VR) computing may comprise an interface to receive data associated with a plurality of signal emitters (e.g., light sources) or a plurality of signal receivers (e.g., photosensors) associated with a cable connecting a head mounted device (HMD) to a client device. The apparatus may further include a cable visualization engine coupled to the interface to present or cause to present a visualization of the cable in an AR or VR environment provided to the HMD by the client device. Other embodiments may be described and claimed.

## Description

### Technical Field

The present disclosure relates to the field of augmented reality (AR) or virtual reality (VR) computing, in particular, to detection of a cable tethered to a head mounted device (HMD) to connect the HMD to a client device.

### Background

The background description provided herein is for the purpose of generally presenting the context of the disclosure. Unless otherwise indicated herein, the materials described in this section are not prior art to the claims in this application and are not admitted to be prior art by inclusion in this section.

AR/VR HMDs, such as Headsets, typically have tethered cables that connect the HMDs to the client devices, such as a personal computer (PC). Presence of these cables can be very inconvenient, irritating and dangerous when the user is moving around in the AR/VR environment because of the cable getting in the way.

Current solutions such as using a clip to attach the cable to the HMD or belt of the user are not very effective as this still leaves portions of the cable the user can trip over. Other solutions such as suspending the cable from the ceiling require fairly elaborate setups that need pulleys and retractors that hook up the cable to the ceiling. Such set up requires either permanent or semi-permanent dedicated space which may not be practical for most people.

Intel® offers a vest/backpack solution which involves the user carrying around a PC and battery tethered to the HMD. Such arrangement may have battery replacement as well as weight considerations for the user.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure 1 illustrates an overview of an AR/VR system having an active cable detection arrangement of the present disclosure, in accordance with various embodiments.
Figure 2 illustrates an overview of another AR/VR system having a passive cable detection arrangement of the present disclosure, in accordance with various embodiments.
Figure 3A illustrate example visualization of a detected cable, in accordance with various embodiments.
Figure 3B illustrates an example process for visualizing a detected cable, in accordance with various embodiments.
Figure 4 illustrates an example computer system, suitable for use to practice the present disclosure (or aspects thereof), in accordance with various embodiments.
Figure 5 illustrates an example software architecture of an AR/VR application, in accordance with various embodiments.
Figure 6 illustrates an example storage medium with instructions configured to enable a computer system to practice the present disclosure, in accordance with various embodiments.
Figure 7 illustrates an example HMD, suitable for use to practice the present disclosure (or aspects thereof), in accordance with various embodiments.

### Detailed Description

The present disclosure presents methods and apparatuses for awareness and visualization of the presence and position of a cable in an AR/VR environment so that the user can make adjustments accordingly, to avoid cable related issues.

In embodiments, an apparatus for augmented reality (AR) or virtual reality (VR) computing may comprise an interface to receive data associated with a plurality of signal emitters or a plurality of signal receivers associated with a cable connecting a head mounted device (HMD) to a client device. The apparatus may further include a cable visualization engine coupled to the interface to present or cause to present a visualization of the cable in an AR or VR environment provided to the HMD by the client device.

In embodiments, the plurality of signal emitters may be light sources disposed at a plurality of locations on the cable and illuminate at least periodically. In embodiments, the plurality of light sources may be light emitting diodes (LEDs) that emit light at least periodically. In embodiments, the data associated with the plurality of light sources may be location data of the plurality of light sources. And the location data of the plurality of light sources may be extracted from images captured by a camera.

In alternate embodiments, the plurality of signal receivers may be photosensors disposed at a plurality of locations on the cable, and output corresponding signals indicative of detection of light. The data associated the plurality of photosensors may be the signals outputted by the plurality of photosensors. The light detected by the photosensors may be pulsed laser light from a light detection and ranging (LiDAR) device. The pulsation pattern of the laser light may be known or provided to the cable visualization engine.

The interface and/or the visualization engine may be implemented in hardware and/or software.

In the description to follow, reference is made to the accompanying drawings, which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

Operations of various methods may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiments. Various additional operations may be performed and/or described operations may be omitted, split or combined in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used hereinafter, including the claims, the terms "interface" and "engine" may refer to, be part of, or include an Application Specific Integrated Circuit (ASIC), an electronic circuit, a programmable combinational logic circuit (e.g., field programmable gate arrays (FPGA)), a processor (shared or dedicate) and/or memory (shared or dedicated) that execute a plurality of programming instructions of one or more software or firmware programs to provide the described functionality.

The term "virtual reality" (VR) as used herein refers to computer-generated simulation of a three-dimensional image or environment that can be interacted with in a seemingly real or physical way by a person. The term "augmented reality" (AR) as used herein refers to a technology that includes superimposition of a computer-generated image on a user's view of the real world, thus providing a composite view. It includes mixed or merged reality (MR) where the real and virtual worlds are merged to produce new environments and visualizations where physical and digital objects co-exist and interact in real time. Thus, the term AR/VR as used herein, encompasses MR.

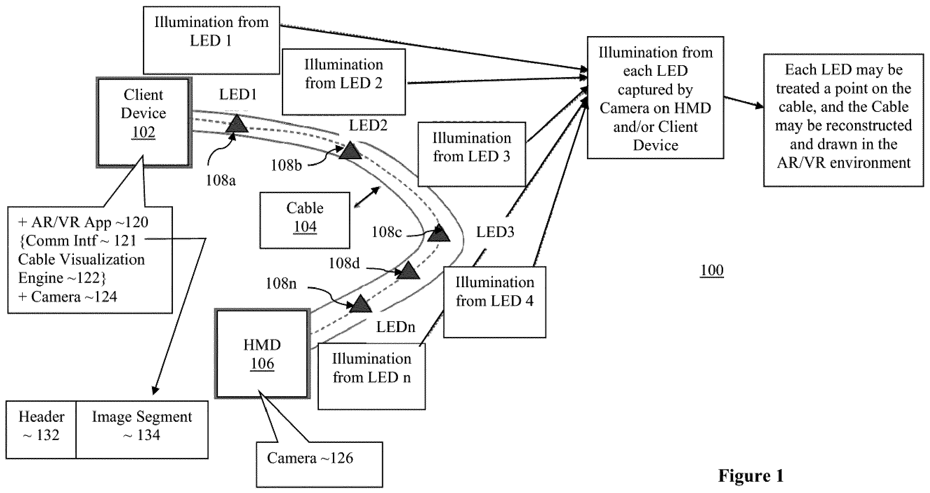

Referring now to Figure 1, wherein an overview of an AR/VR system having an active cable detection arrangement of the present disclosure, in accordance with various embodiments, is shown. As illustrated, in embodiments, an AR/VR system 100 may include client device 102, HMD 106, and cable 104 tethered to HMD 106 to connect HMD 106 to client device 102. Cable 104, client device 102, and optionally, HMD 106, may be provided with complementary features that cooperate to render a visualization of cable 104 in an AR/VR environment rendered in HMD 106.

In various embodiments, cable 104 may be an "active" cable configured with a number of signal emitters to emit signals, at least periodically. For ease of understanding, for the illustrated embodiments, cable 104 is shown as configured with a number of light sources 108a-108n disposed at various locations of cable 104. Light sources 108a-108n may be configured to illuminate at least periodically. In embodiments, light sources 108a-108n may be light emitting diodes (LEDs) that emit light at least periodically. In alternate embodiments, the signal emitters may be audio, ultrasonic or infrared signal emitters that emit audio, ultrasound or infrared signals periodically.

Further, either or both client device 102 and HMD 106 may include signal detection devices to detect or enable detection of the signal emitters leveraging on the signals they emit (at least periodically). For the light source (LED) embodiments, either or both client device 102 and HMD 106 may include camera 124 and/or camera 126 to capture images of the environment, thereby capturing illumination of light sources 108a-108n, enabling determination of the locations of light sources 108a-108n.

Client device 102 may include AR/VR application 120 incorporated with elements of the cable visualization technology of the present disclosure. For these embodiments, the elements may include communication interface 121 configured to receive from either the signal detection devices in client device 102 or HMD 106, such as camera 124 and/or camera 126, data associated with or enabling identification of the locations of the signal emitters, such as the captured images of camera 124 and/or camera 126, and cable visualization engine 122 coupled with interface 121 to process the data associated with or enabling identification of the locations of the signal emitters, such as the captured image, to determine the locations of light sources 108a-108n. In the case of the captured images, the determination may be based at least in part on the illumination of light sources 108a-108n captured in the received images. On extraction/determination, cable visualization engine 122 may construct and render a visualization of cable 104 in the AR/VR environment rendered on HMD 106. In alternate embodiments, cable visualization engine 122 may cause a visualization of cable 104 to be rendered in the AR/VR environment on HMD 106, e.g., using a rendering service (not shown) of AR/VR application 120.

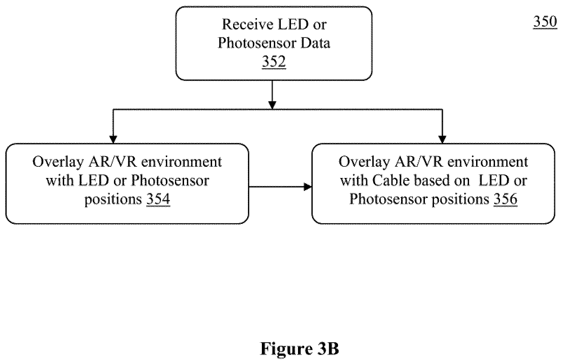

In embodiments, communication interface 121 may be configured to receive data packets having at least a header portion 132 and one or more image segments 134 of the captured images. Embodiments of cable visualization engine 122 will be further described below with references to Figure 3B.

As described earlier, communication interface 121 and/or cable visualization engine 122 may be implemented in hardware and/or software. In embodiments, communication interface 121 and/or cable visualization engine 122 may be part of, or included in an ASIC, an electronic circuit, or a programmable combinational logic circuit (e.g., field programmable gate arrays (FPGA)). In other embodiments, communication interface 121 and/or cable visualization engine 122 may include a processor and memory (shared or dedicate) that execute a plurality of programming instructions of one or more software or firmware programs that provide the described functionality.

In embodiments, except for the cable visualization technology of the present disclosure, client device 102 may be any one of a number of computing devices known in the art, including, but not limited to, a smartphone, a laptop computer, a computing tablet, a desktop computer, a game console, a set-top box, or a server. In embodiments, except for the cable visualization technology of the present disclosure, cable 104 may be any one of a number of cables designed to couple HMD to client devices, known in the art. In embodiments, except for the cable visualization technology of the present disclosure, HMD 106 may be any one of a number of HMD known in the art, including, but not limited to, a headset.

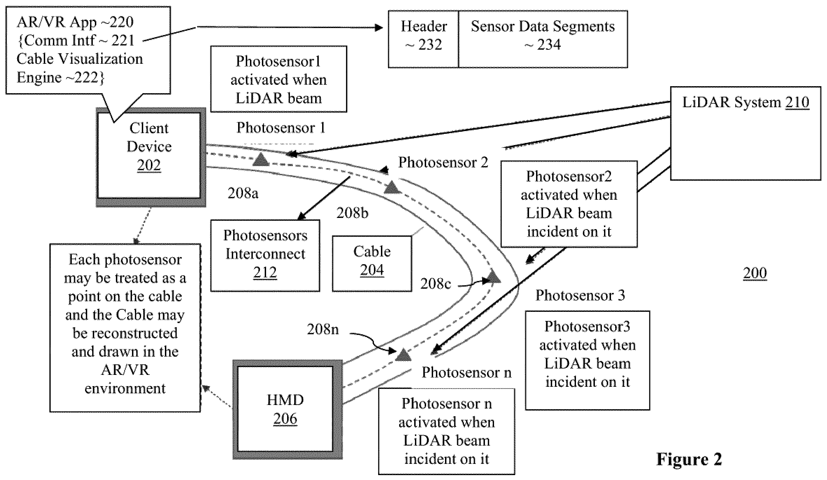

Referring now to Figure 2, wherein another overview of another AR/VR system having a passive cable detection arrangement of the present disclosure, in accordance with various embodiments, is shown. As illustrated, in embodiments, an AR/VR system 200 may include client device 202, HMD 206, and cable 204 tethered to HMD 206 to connect HMD 206 to client device 202. Further, AR/VR system 200 may include a signal provision device, such as, Light Detection and Ranging (LiDAR) System 210. Cable 204 and client device 202 are provided with complementary features that cooperate with the signal provision device, e.g., LiDAR system 210 and each other, to render a visualization of cable 204 in an AR/VR environment rendered in HMD 206.

For the illustrated embodiments, cable 204 may be configured with a number of signal receivers, such as photosensors 208a-208n, disposed at various locations of cable 204 to receive/sense signals provided by the signal provision device, e.g., light pulsed by LiDAR System 210. In turn, the signal receivers, such as photosensors 208a-208n, may output signals (for client device 202) on the receipt, detection or sensing of the signals provided by the signal provision device, i.e., the light pulsed by LiDAR System 210 for the photosensor embodiment.

Client device 102 may include AR/VR application 220 incorporated with elements of the cable visualization technology of the present disclosure. For these embodiments, the elements may include communication interface 221 configured to receive the sensor data signals output by signal receivers, e.g., photosensors 208a-208n. Cable visualization engine 222 coupled with communication interface 221 may process the received sensor data signal to determine the locations of signal receivers, e.g., photosensors 208a-208n, based at least in part on signal provision pattern (e.g., light pulsation pattern of LiDAR system 210) known to or otherwise provided to cable visualization engine 222. On determination, cable visualization engine 222 may construct and render a visualization of cable 204 in the AR/VR environment rendered on HMD 206. In alternate embodiments, cable visualization engine 222 may cause a visualization of cable 204 to be rendered in the AR/VR environment on HMD 206, e.g., using a rendering service (not shown) of AR/VR application 220.

In embodiments, communication interface 221 may be configured to receive sensor data packets having at least a header portion 232 and one or more sensor data segments 234. Embodiments of cable visualization engine 222 will be further described below with references to Figure 3B.

As described earlier, communication interface 221 and/or cable visualization engine 222 may be implemented in hardware and/or software. In embodiments, communication interface 221 and/or cable visualization engine 222 may be part of, or included in an ASIC, an electronic circuit, or a programmable combinational logic circuit (e.g., field programmable gate arrays (FPGA)). In other embodiments, communication interface 221 and/or cable visualization engine 222 may include a processor and memory (shared or dedicate) that execute a plurality of programming instructions of one or more software or firmware programs that provide the described functionality.

Similar to client device 102, except for the cable visualization technology of the present disclosure, client device 202 may be any one of a number of computing devices known in the art, including, but not limited to, a smartphone, a laptop computer, a computing tablet, a desktop computer, a game console, a set-top box, or a server. Similar to cable 104, except for the cable visualization technology of the present disclosure, cable 204 may be any one of a number of cables designed to couple HMD to client devices, known in the art. Similar to HMD 106, except for the cable visualization technology of the present disclosure, HMD 206 may be any one of a number of HMD known in the art, including, but not limited to, a headset. In other embodiments, the signal provision device may provide audio, ultrasonic or infrared signals instead, and the signal receivers may be audio, ultrasonic or infrared signal receivers/detectors/sensors instead. For the photosensor embodiments, LiDAR system 210 may be any one of a number of LiDAR system known in the art.

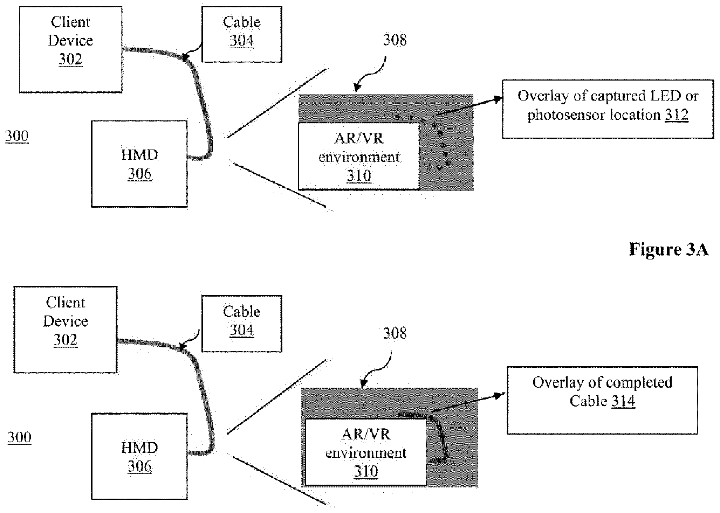

Referring now to Figure 3A, wherein example renderings of a detected cable, in accordance with various embodiments, are shown. As illustrated, an AR/VR system 300 may include client device 302, cable 304 and HMD 306 coupled with each other. Client device 302 may be client device 102 or 202 described earlier. Cable 304 may be cable 104 or 204 described earlier. HMD 306 may be HMD 106 or HMD 206 described earlier.

Depicted at the upper portion of the Figure 3A is an embodiment where client device 302, on determination of the locations of the signal emitters, e.g., light sources or signal receivers, e.g., photosensors, of cable 304, renders a visualization of cable 304 by overlaying a map 312 of the determined locations of the signal emitters, e.g., light sources or signal receivers, e.g., photosensors, of cable 304 in the AR/VR environment 310 rendered in HMD 306.

Depicted at the lower portion of the Figure 3A is an embodiment where client device 302, on determination of the locations of the signal emitters, e.g., light sources or signal receivers, e.g., photosensors, of cable 304, renders a visualization of cable 304 by overlaying an image 314 of cable 304 in the AR/VR environment 310 rendered in HMD 306. Image 314 of cable 304 may be constructed by extrapolating and linking the determined locations of the signal emitters, e.g., light sources or signal emitters, e.g., photosensors of cable 304.

In embodiments, client device 302 may be configured to first render map 312 and then subsequently render image 314 on completion of the extrapolation processing.

Referring now to Figure 3B, wherein an example process for visualization a detected cable, in accordance with various embodiments, is illustrated. As shown, for the illustrated embodiments, example process 350 for visualizing a detected cable in an AR/VR environment may include operations performed at blocks 352-356. In embodiments, the operations may be performed by cable visualization engine 122 of Figure 1 or cable visualization engine 222 of Figure 2. In alternate embodiments, process 350 may include more or less operations, or the operations performed in different order.

For the illustrated embodiments, process 350 may start at block 352. At block 352, either images having illumination of light sources (e.g., LEDs) disposed on a cable or sensor data packets having sensor data outputted by photosensors disposed on the cable may be received. From block 352, process 350 may proceed to either block 354 or block 356.

At block 354, a visualization of the detected cable may be rendered by overlaying a map of the locations of the detected light sources or photosensors in the AR/VR environment. At 356, a visualization of the detected cable may be rendered by overlaying a depiction of the cable based on the determined locations of the detected light sources or photosensors.

In embodiments, process 350 may proceed to block 354 first, before proceeding to block 356. In other embodiments, process 350 may proceed to block 356 directly, skipping block 354.

In embodiments, cable visualization process 350 may be performed (e.g., running cable visualization engine 122) periodically. In other embodiments, cable visualization process 350 may be performed (e.g., running cable visualization engine 122) when movement of the cable (in excess of certain movement thresholds) is detected. In still other embodiments, cable visualization process 350 may be performed (e.g., running cable visualization engine 122) when user movement (in excess of certain movement thresholds) is detected. Similarly, the cable visualization may be shown to the user continuously, periodically, when movement of the cable is detected, when movement of the user is detected, and so forth. In embodiments, the cable may always overlaid the scenes output by the AR/VR application, while in other embodiments, the cable may overlaid the scenes output by the AR/VR application when the user is coming in proximity of the cable.

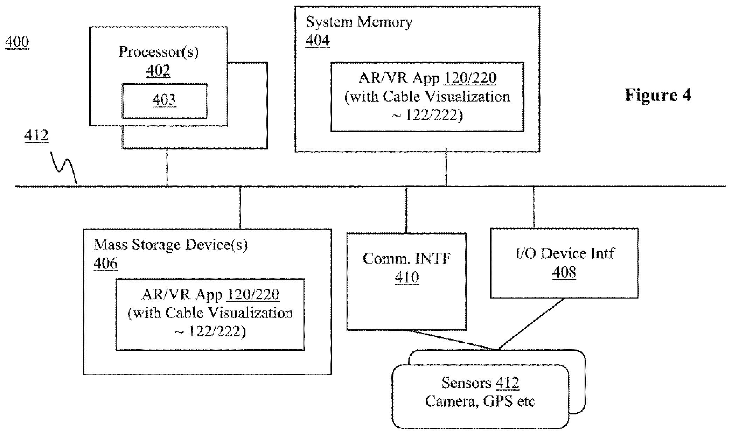

Referring now to Figure 4, wherein a block diagram of a computer device suitable for use as a client device to practice aspects of the present disclosure, in accordance with various embodiments, is illustrated. As shown, in embodiments, computer device 400 may include one or more processors 402 and system memory 404. Each processor 402 may include one or more processor cores. In embodiments, one or more processors 402 may include one or more hardware accelerators 403 (such as, FPGA). System memory 404 may include any known volatile or non-volatile memory. Additionally, computer device 400 may include mass storage device(s) 406 (such as solid state drives), input/output device interface 408 (to interface with e.g., cameras, sensors, GPS 412) and communication interfaces 410 (such as serial interface, near field communication, network interface cards, modems and so forth). The elements may be coupled to each other via system bus 412, which may represent one or more buses. In the case of multiple buses, they may be bridged by one or more bus bridges (not shown).

Each of these elements may perform its conventional functions known in the art. In particular, system memory 404 and mass storage device(s) 406 may be employed to store a working copy and a permanent copy of the executable code of the programming instructions implementing the operations described earlier, e.g., but are not limited to, operations associated with AR/VR application 120/200, in particular, cable visualization engine 122 or 222. The programming instructions may comprise assembler instructions supported by processor(s) 402 or high-level languages, such as, for example, C, that can be compiled into such instructions. In embodiments, some of the functions performed by cable visualization engine 122 or 222 may be implemented with hardware accelerator 403 instead.

The permanent copy of the executable code of the programming instructions and/or the bit streams to configure hardware accelerator 403 may be placed into permanent mass storage device(s) 406 or hardware accelerator 403 in the factory, or in the field, through, for example, a distribution medium (not shown), such as a compact disc (CD), or through communication interface 410 (from a distribution server (not shown)).

Except for the use of computer device 400 to host AR/VR application 120 or 220 with cable visualization engine 122 or 222, the constitutions of the elements 410-412 are otherwise known, and accordingly will not be further described.

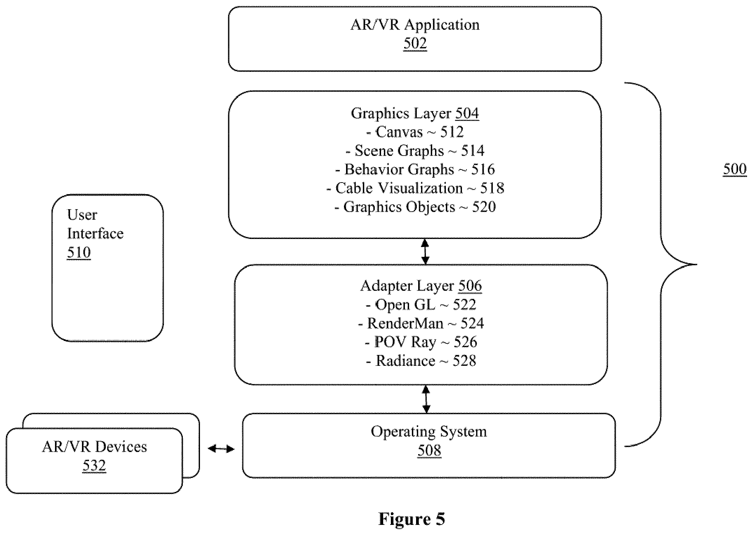

Referring now to Figure 5 wherein an example software architecture of a client device, in accordance with various embodiments, is illustrated. As shown, for the illustrated embodiments, software architecture 500 of client device 102/202 may include a number of layers. At the top may be an application layer where AR/VR application 502 (which may be AR/VR application 102 or 202) resides. Below the application layer may be a graphics layer 504 having a number of graphics elements to provide various graphics related services to the applications in the application layer. In embodiments, the graphics layer 504 may include elements, such as, but not limited to, canvas 512, scene graphs 514, behavior graphs 516, cable visualization 518 and other graphics objects 320.

Below the graphics layer 504 may be adapter layer 506 having a number of adapters/services to adapt or abstract hardware services for the graphics elements of the graphics layer 504. In embodiments, these elements may include, but are not limited to, an OpenGL adapter 522, a RenderMan adapter 524, a Persistence of Vision Ray Tracer (POV Ray) adapter 506, and a radiance adapter 528.

Below the adapter layer 506 may be an Operating System (OS) layer having OS 508 configured to access and interact with the AR/VR devices 532 (which may be e.g., HMD 106 or 206), on behalf of the adapters/services of adapter layer 506. OS 508 may be any one of a number of OS known in the art.

Further, the various elements of software layers 502-508 may interact with a user through user interface 510. In embodiments, user interface 510 may be a graphical user interface. In particular, graphical user interface 510 may be whether the AR/VR environment, including visualizations of the cable coupling the HMD and the client device be rendered.

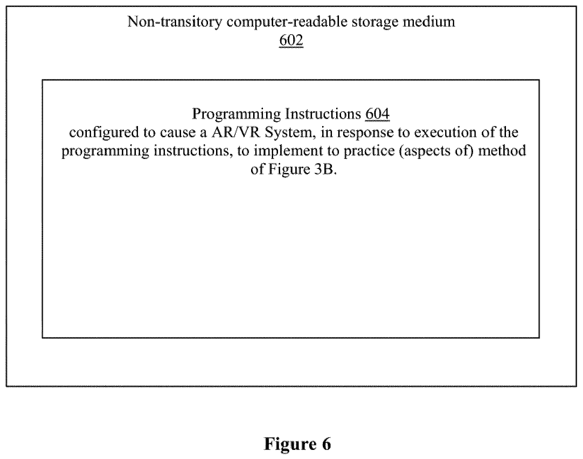

Referring now to Figure 6, wherein an example non-transitory computer-readable storage medium having instructions configured to practice all or selected ones of the operations associated with AR/VR application 120/220 earlier described, in accordance with various embodiments, is shown. As illustrated, non-transitory computer-readable storage medium 602 may include the executable code of a number of programming instructions 604. Executable code of programming instructions 604 may be configured to enable a system, e.g., client device 102/202 or computer device 400, in response to execution of the executable code/programming instructions, to perform, e.g., various operations associated with AR/VR application 120/220, in particular, various operations associated with cable visualization engine 122/222. In alternate embodiments, executable code/programming instructions 604 may be disposed on multiple non-transitory computer-readable storage medium 602 instead. In still other embodiments, executable code/programming instructions 604 may be encoded in transitory computer readable medium, such as signals.

In embodiments, a processor may be packaged together with a computer-readable storage medium having some or all of executable code of programming instructions 604 configured to practice all or selected ones of the operations earlier described. For one embodiment, a processor may be packaged together with such executable code 604 to form a System in Package (SiP). For one embodiment, a processor may be integrated on the same die with a computer-readable storage medium having such executable code 604. For one embodiment, a processor may be packaged together with a computer-readable storage medium having such executable code 604 to form a System on Chip (SoC). For at least one embodiment, the SoC may be utilized in, e.g., client device 102/202.

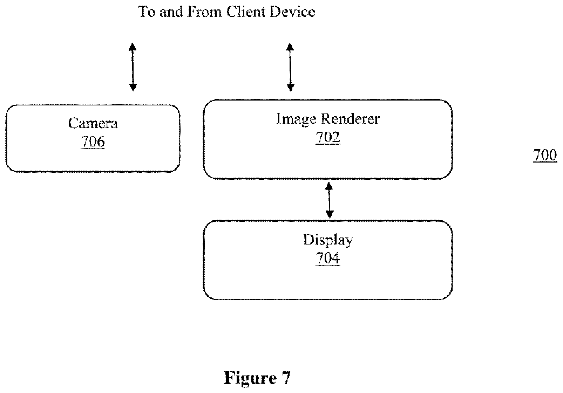

Referring now to Figure 7, wherein an example hardware architecture of a HMD, in accordance with various embodiments, is shown. As illustrated, for the embodiments, HMD 700 (which may be HMD 106 or 206) may include image rendered 702 and display 704 coupled with each other. Image generator 702 may be configured to receive data associated with or enable determination of locations of the signal emitters of a cable, such as image data of images, including e.g., data associated with rendering a visualization of a cable (such as cable 104 or 204), and in response, render the images on display 704.

In embodiments, image render 702 may be implemented in hardware and/or software. Hardware implementations may include ASIC, an electronic circuit, or a programmable combinational logic circuit (e.g., field programmable gate arrays (FPGA)). In other embodiments, software implementations may include a processor and memory (shared or dedicate) that execute a plurality of programming instructions that provide the described functionality.

In embodiments, display 704 may be any one of a number displays known in the art, including but are not limited to LED displays, Electroluminescent displays (ELD), Plasma display panels (PDP), Liquid crystal displays (LCD), or Organic light-emitting diode display (OLED).

In embodiments, as described earlier, HMD 700 may include camera 706 to capture images of the ambient environment, including capturing light emitted by various light sources embedded in a cable coupling HMD 700 to a client device (as described earlier for HMD 106).

Thus, methods and apparatuses for cable detection and visualization for AR/VR computing have been described. Example embodiments described include, but are not limited to,
Example one may be an apparatus for augmented reality (AR) or virtual reality (VR) computing, comprising: an interface to receive data associated with a plurality of signal emitters or a plurality of signal receivers associated with a cable connecting a head mounted device (HMD) to a client device; and a cable visualization engine coupled to the interface to present or cause to present a visualization of the cable in an AR or VR environment provided to the HMD by the client device.
Example 2 may be example 1, wherein the plurality of signal emitters are disposed at a plurality of locations on the cable, and emit signals at least periodically.
Example 3 may be example 2, wherein the plurality of signal emitters are light emitting diodes (LEDs) that emit light at least periodically.
Example 4 may be example 3, wherein the data associated with the plurality of light sources are location data of the plurality of light sources; wherein the location data of the plurality of light sources are extracted from images captured by a camera; and wherein the interface is to receive the images, and the cable visualization engine is to process the images to extract the location data of the plurality of light sources.
Example 5 may be example 4, wherein the camera is disposed at a selected one of the client device or the HMD.
Example 6 may be example 1, wherein the plurality of signal receivers are disposed at a plurality of locations on the cable, and output corresponding signals indicative of reception of signals; wherein the data associated the plurality of signal receivers s are the signals outputted by the plurality of signal receivers.
Example 7 may be example 6, wherein the signal receivers are photosensors, and the signals received by the signal receivers are pulsed laser light from a light detection and ranging (LiDAR) device, sensed by the photosensors.
Example 8 may be example 7, wherein a pulsation pattern of the laser light is known or provided to the cable visualization engine.
Example 9 may be example 7, further comprising the LiDAR device.
Example 10 may be any one of examples 1-9, wherein the cable visualization engine is to present or cause to present a series of points corresponding to locations of the signal emitters or receivers on the cable, in the AR or VR environment.
Example 11 may be any one of examples 1-9, wherein the cable visualization engine is to present or cause to present a rendering of the cable in the AR or VR environment unconditionally or when the user is in proximity to the cable.
Example 12 may be any one of examples 1-9, wherein the interface is a communication interface comprising circuitry, or the cable visualization engine is implemented with an application specific integrated circuit or a programmable circuit.
Example 13 may be any one of examples 1-9, further comprising a processor, wherein the interface is a software interface operated by the processor, or the cable visualization engine is a software module operated by the processor.
Example 14 may be any one of examples 1-9, further comprising an AR/VR application having the interface and the cable visualization engine.
Example 15 may be any one of examples 1-9, wherein the apparatus is the client device; wherein the client device is a selected one of a smartphone, a computing tablet, a laptop computer, a desktop computer, a set-top box, a game console, or a server.
Example 16 may be a method for augmented reality (AR) or virtual reality (VR) computing, comprising: receiving, by a client device, data associated with a plurality of signal emitters or a plurality of signal receivers associated with a cable connecting a head mounted device (HMD) to the client device; and presenting, by the client device, a visualization of the cable in an AR or VR environment provided to the HMD by the client device, based at least in part on the data associated with the plurality of signal emitters or the plurality of signal receivers.
Example 17 may be example 16, wherein the plurality of signal emitters are light sources disposed at a plurality of locations on the cable, and illuminate at least periodically; wherein the data associated with the plurality of light sources are location data of the plurality of light sources; wherein the location data of the plurality of light sources are extracted from images captured by a camera; wherein the method further comprises processing the images to extract the location data of the plurality of light sources; and wherein presenting comprises presenting the visualization of the cable in the AR or VR environment provided to the HMD, based at least in part on the extracted location data of the plurality of light sources.
Example 18 may be example 16, wherein the plurality of signal receivers are photosensors disposed at a plurality of locations on the cable, and output corresponding signals indicative of detection of light; wherein the data associated the plurality of photosensors are the signals outputted by the plurality of photosensors; and wherein presenting comprises presenting the visualization of the cable in the AR or VR environment provided to the HMD, based at least in part on the signals outputted by the plurality of photosensors.
Example 19 may be at least one computer readable media (CRM) comprising a plurality of instructions arranged to cause a client device, in response to execution of the instructions by a processor of the client device, to perform any one of the methods of examples 16-18.
Example 20 may be the client device of any one of examples 1 - 15.
Example 21 may be the HMD of any one of examples 1 - 15.

Although certain embodiments have been illustrated and described herein for purposes of description, a wide variety of alternate and/or equivalent embodiments or implementations calculated to achieve the same purposes may be substituted for the embodiments shown and described without departing from the scope of the present disclosure. This application is intended to cover any adaptations or variations of the embodiments discussed herein. Therefore, it is manifestly intended that embodiments described herein be limited only by the claims.

Where the disclosure recites "a" or "a first" element or the equivalent thereof, such disclosure includes one or more such elements, neither requiring nor excluding two or more such elements. Further, ordinal indicators (e.g., first, second or third) for identified elements are used to distinguish between the elements, and do not indicate or imply a required or limited number of such elements, nor do they indicate a particular position or order of such elements unless otherwise specifically stated.

## Claims

1. An apparatus for augmented reality (AR) or virtual reality (VR) computing, comprising:
an interface to receive data associated with a plurality of signal emitters or a plurality of signal receivers associated with a cable connecting a head mounted device (HMD) to a client device; and
a cable visualization engine coupled to the interface to present or cause to present a visualization of the cable in an AR or VR environment provided to the HMD by the client device.

2. The apparatus of claim 1, wherein the plurality of signal emitters are disposed at a plurality of locations on the cable, and emit signals at least periodically.

3. The apparatus of claim 2, wherein the plurality of signal emitters are light emitting diodes (LEDs) that emit light at least periodically.

4. The apparatus of claim 3, wherein the data associated with the plurality of light sources are location data of the plurality of light sources; wherein the location data of the plurality of light sources are extracted from images captured by a camera; and wherein the interface is to receive the images, and the cable visualization engine is to process the images to extract the location data of the plurality of light sources, wherein the camera is disposed at a selected one of the client device or the HMD.

5. The apparatus of claim 1, wherein the plurality of signal receivers are disposed at a plurality of locations on the cable, and output corresponding signals indicative of reception of signals; wherein the data associated the plurality of signal receivers are the signals outputted by the plurality of signal receivers.

6. The apparatus of claim 5, wherein the signal receivers are photosensors, and the signals received by the photosensors are pulsed laser light from a light detection and ranging (LiDAR) device, sensed by the photosensors; wherein a pulsation pattern of the laser light is known or provided to the cable visualization engine; and wherein the apparatus further comprises the LiDAR device.

7. The apparatus of claim 1, wherein the cable visualization engine is to present or cause to present a series of points corresponding to locations of the signal emitters or receivers on the cable, in the AR or VR environment.

8. The apparatus of claim 1, wherein the cable visualization engine is to present or cause to present a rendering of the cable in the AR or VR environment unconditionally or when the user is in proximity to the cable .

9. The apparatus of any one of claims 1-8, wherein the interface is a communication interface comprising circuitry, or the cable visualization engine is implemented with an application specific integrated circuit or a programmable circuit.

10. The apparatus of any one of claim 1-8, further comprising a processor, wherein the interface is a software interface operated by the processor, or the cable visualization engine is a software module operated by the processor.

11. The apparatus of any one of claim 1-8, further comprising an AR/VR application having the interface and the cable visualization engine.

12. The apparatus of any one of claim 1-8, wherein the apparatus is the client device; wherein the client device is a selected one of a smartphone, a computing tablet, a laptop computer, a desktop computer, a set-top box, a game console, or a server.

13. A method for augmented reality (AR) or virtual reality (VR) computing, comprising:
receiving, by a client device, data associated with a plurality of signal emitters or a plurality of signal receivers associated with a cable connecting a head mounted device (HMD) to the client device; and
presenting, by the client device, a visualization of the cable in an AR or VR environment provided to the HMD by the client device, based at least in part on the data associated with the plurality of signal emitters or the plurality of signal receivers.

14. The method of claim 13, wherein the plurality of signal emitters are light sources disposed at a plurality of locations on the cable, and illuminate at least periodically; wherein the data associated with the plurality of light sources are location data of the plurality of light sources; wherein the location data of the plurality of light sources are extracted from images captured by a camera; wherein the method further comprises processing the images to extract the location data of the plurality of light sources; and wherein presenting comprises presenting the visualization of the cable in the AR or VR environment provided to the HMD, based at least in part on the extracted location data of the plurality of light sources.

15. The method of claim 13, wherein the plurality of signal receivers are photosensors disposed at a plurality of locations on the cable, and output corresponding signals indicative of detection of light; wherein the data associated the plurality of photosensors are the signals outputted by the plurality of photosensors; and wherein presenting comprises presenting the visualization of the cable in the AR or VR environment provided to the HMD, based at least in part on the signals outputted by the plurality of photosensors.
